# EUROPÄISCHE PATENTANMELDUNG

(11) **EP 4 837 774 A1**
(43) Veröffentlichungstag der Anmeldung: **11.11.2026**
(21) Anmeldenummer: 26175351.1
(22) Anmeldetag: 29.04.2026
(51) Int. Cl.: B60L 53/16, B60L 53/302, H01R 13/66

(54) **LADESTECKER MIT TEMPERATURSENSOR**

(30) Priorität: 08.05.2025 DE 102025117786
(71) Anmelder: Amphenol Tuchel Industrial GmbH, 74080 Heilbronn (DE)
(72) Erfinder: GÖRL, Ann-Kathrin, 74251 Lehrensteinsfeld (DE)
(74) Vertreter: Staeger & Sperling Partnerschaftsgesellschaft mbB

(57) **Zusammenfassung**

Die Erfindung betrifft einen Ladestecker mit einem Ladesteckergehäuse und einem in dem Ladesteckergehäuse aufgenommenen Einlegeteil, wobei in dem Einlegeteil Kontaktelemente zur lösbaren, elektrisch leitenden Verbindung eines batterieelektrischen Fahrzeugs mit einer Ladestation und wenigstens ein Temperatursensor zur Temperaturmessung der Kontaktelemente aufgenommen sind, wobei die Kontaktelemente aus einem Gleichstrompluskontaktelement und einem Gleichstromminuskontaktelement bestehen und beabstandet zueinander sowie weitgehend achsensymmetrisch bezüglich der Symmetrielinie y-y des Ladesteckers angeordnet sind, wobei der wenigstens eine Temperatursensor zwischen den Kontaktelementen in einer Vertiefung des Einlegeteils angeordnet ist.

## Beschreibung

Die Erfindung betrifft einen Ladestecker mit einem Ladesteckergehäuse und einem in dem Ladesteckergehäuse aufgenommenen Einlegeteil, wobei in dem Einlegeteil Kontaktelemente zur lösbaren, elektrisch leitenden Verbindung eines batterieelektrischen Fahrzeugs mit einer Ladestation und wenigstens ein Temperatursensor zur Temperaturmessung der Kontaktelemente aufgenommen sind, wobei die Kontaktelemente aus einem Gleichstrompluskontaktelement und einem Gleichstromminuskontaktelement bestehen und beabstandet zueinander sowie weitgehend achsensymmetrisch bezüglich der Symmetrielinie y-y des Ladesteckers angeordnet sind.

Kontakte im Allgemeinen weisen wenigstens einen elektrisch leitfähigen Kontaktabschnitt zum lösbaren, temporären oder steckenden Verbinden mit einem korrespondierenden Gegenkontaktelement und einen an den Kontaktabschnitt anschließenden Schaftabschnitt zum Befestigen einer elektrischen Leitung an dem Kontakt auf. Ein solcher Kontakt, Steckkontakt, Hochstromkontakt kann an einem Ladestecker oder einer Ladebuchse, beispielsweise zum Aufladen eines elektrisch angetriebenen Fahrzeugs Verwendung finden. In diesem Fall ist ein Kabel einerseits an eine Ladestation angeschlossen und trägt andererseits ein Steckverbinderteil in Form eines Ladesteckers, der in ein zugeordnetes Gegensteckverbinderteil in Form einer Ladebuchse an einem Fahrzeug eingesteckt werden kann, um auf diese Weise eine elektrische Verbindung zwischen der Ladestation und dem Fahrzeug herzustellen. Andere Verwendungsmöglichkeiten von Hochstromkontakten ergeben sich bei einer Vielzahl von weiteren Hochstromanwendungen, wie beispielsweise zum Betrieb eines Hochstrom-Haushaltsgerätes oder zur Energieversorgung eines Schweißgerätes, Kompressors, Durchlauferhitzers etc.

Versorgungs- und Ladeströme können grundsätzlich als Gleichströme oder als Wechselströme übertragen werden, wobei insbesondere Ladeströme und Hochstrombereiche in Form von Gleichstrom eine große Stromstärke, beispielsweise größer als 200 A oder sogar größer als 300 A oder gar 350 A aufweisen und zu einer Erwärmung des Kabels genauso wie eines mit dem Kabel verbundenen Hochstromkontaktes führen können.

Um batterieelektrisch angetriebene Lastkraftwagen schnell und effizient aufladen zu können sind in der Regel noch höhere elektrische Ladeleistungen erforderlich. Ein sogenannter Megawatt Charging System Standard (Abkürzung: MCS) soll als Schnellladesystem in der Zukunft Anwendung finden und soll eine Ladeleistung von bis zu 3,75 MW ermöglichen, wobei die Spannung bis zu 1.250 V und der Ladestrom bis zu 3.000 A aufweisen kann. Eine andere bekannte Ladesteckerkonstruktion ist beispielsweise der CCS-Ladestecker (CCS = Combined Charging System; das Combined Charging System ist ein internationaler Standard des Charln-Konsortiums für den Anschluss von Elektroautos an Schnellladestationen).

Im Rahmen der angestrebten Elektromobilität sind hohe Ladeströme von besonderer Bedeutung. Nur auf diese Weise lassen sich Elektrofahrzeuge beziehungsweise dessen Energiespeicher in kurzer Zeit "auftanken".

Unabhängig von der Spezifikation des Ladesteckers oder der Ladesteckerdose (beispielsweise nach der Norm IEC 62196-2, IEC 62196-3 oder CHAdeMO-Standard oder nach dem Megawatt Charging System Standard) ist es insbesondere bei höheren und hohen Ladeleistungen ganz besonders wichtig, dass Ladestecker und/oder Ladesteckerdosen durch die bei der elektrischen Leistungsübertragung auftretenden Widerstandsverluste nicht über deren zulässige Grenztemperatur aufgeheizt werden.

Der ursächliche Zusammenhang des Aufheizens entsteht dadurch, dass bei einem Ladevorgang von elektrischen Energiespeichern, Akkumulatoren Wärme entsteht infolge der hohen übertragenen elektrischen Leistungen, elektrischen Strömen nicht nur an dem Kabel, mit dem ein Ladestecker beispielsweise mit einer Ladestation verbunden ist, sondern auch an dem Ladestecker und insbesondere innerhalb des Ladesteckers, beispielsweise an Hochstromkontakten, über die ein elektrischer Kontakt mit zugeordneten Gegenkontakten, beispielsweise auf Seiten einer Ladebuchse an einem Elektrofahrzeug hergestellt wird, wenn der Ladestecker in die Ladebuchse eingesteckt ist und die elektrische Leistung übertragen wird.

Im Rahmen der angestrebten Elektromobilität sind hohe Ladeströme von besonderer Bedeutung. Nur auf diese Weise lassen sich Elektrofahrzeuge beziehungsweise dessen Energiespeicher in kurzer Zeit "auftanken".

Ein im Stand der Technik grundsätzlich bekannter Lösungsansatz ist es, Ladestecker und Kontaktelemente passiv oder aktiv zu kühlen, um die Übertragung der elektrischen Leistung mit begrenzter Erwärmung der leistungsübertragenden Bauteile zu realisieren. Die an der elektrischen Leistungsübertragung beteiligten Bauteile und insbesondere die Kontaktelemente werden in vielen Fällen hinsichtlich ihrer Erwärmungssituation gemessen und überwacht. Eine installierte Temperaturüberwachung, Temperaturmessung wird auch als Steuerungsgröße dafür benutzt, die Kühlleistung möglichst effektiv zu gestalten und die erzielbare Kühlleistung zu maximieren. Auch interessant ist es, die Kühlleistung bedarfsabhängig zu steuern und auf die jeweilige Erwärmungssituation hin anzupassen.

Die DE 10 2009 034 886 A1 offenbart eine Steckvorrichtung für ein Ladekabel zur Verbindung eines Elektrofahrzeuges mit einer Ladestation, aufweisend ein Gehäuse und dem Gehäuse zugeordnete elektrische Kontakte zum Anschluss an eine Anschlusseinrichtung in der Ladestation oder in dem Elektrofahrzeug. In dem Gehäuse ist ein als Thermistor ausgebildetes Temperaturerfassungsmittel vorgesehen, wobei über das Temperaturerfassungsmittel die Temperatur im Gehäuse auswertbar ist.

Um die Temperaturerfassung sowohl zuverlässig als auch möglichst genau zu bewerkstelligen ist es wichtig, dass das zu messende Bauteil mit dem Temperaturerfassungsmittel thermisch möglichst gut gekoppelt wird. Eine bewährte Möglichkeit ist es, einen guten Festkörperkontakt herzustellen.

Einen möglichen Lösungsvorschlag zeigt die DE 10 2016 211 876 A1 durch eine Elektroanschlusseinrichtung zur Kopplung mit einer korrespondierenden Verbindungsvorrichtung und zur Übertragung elektrischer Energie, wobei die Elektroanschlusseinrichtung zumindest einen in einem Gehäuse der Elektroanschlusseinrichtung angeordneten und mit diesem verbundenen Leistungskontakt, das heißt dem leistungsübertragenden Kontaktelement und zumindest einen Temperatursensor zum Bestimmen einer Temperatur des Leistungskontakts aufweist. Die Elektroanschlusseinrichtung verfügt über eine in dessen Gehäuse angeordnete Platine, die zwischen dem Leistungskontakt und einem Halteabschnitt des Gehäuses angeordnet ist, wobei die Platine mittels einer zwischen dem Leistungskontakt und dem Halteabschnitt angeordneten Federkrafteinrichtung zwischen dem Leistungskontakt und dem Halteabschnitt verspannt ist. Die Platine ist mit dem Leistungskontakt direkt oder über die Federkrafteinrichtung durch Festkörperkontakt thermisch gekoppelt und der zumindest eine Temperatursensor ist auf der Platine angeordnet.

Einen anderen, von dem Festkörperkontakt als thermische Kopplung abweichenden Lösungsvorschlag lehrt die EP 4 461 588 A1. Der vorgestellte Ladestecker zum Aufladen einer Batterie weist dazu wenigstens einen Leistungskontakt auf, welcher dazu ausgebildet ist, Strom an die Batterie zu übertragen, wobei der Leistungskontakt eine Kontaktfahne aufweist. Als Kontaktfahne wird im Rahmen der Anmeldung der Abschnitt eines Kontakts bezeichnet, welcher mittelbar oder unmittelbar zur elektrischen Verbindung mit einem Kabel vorgesehen ist. Weiterhin ist im Ladestecker ein Kontaktträger vorgesehen, in dem der Leistungskontakt zumindest teilweise angeordnet ist, wobei insbesondere ein Kontaktabschnitt des Leistungskontaktes aus dem Kontaktträger herausragt. Ferner weist der Ladestecker wenigstens einen Sensorträger auf, welcher dazu ausgebildet ist, einen Sensor, insbesondere einen Temperatursensor, in einer dafür vorgesehenen Tasche aufzunehmen und derart ausgebildet und angeordnet ist, dass der Temperatursensor in einem definierten Abstand zur Leistungskontakt positioniert ist.

Bei einem aus der EP 2 605 339 A1 bekannten Ladestecker ist ein Temperatursensor an einem Isolierkörper in etwa mittig zwischen Kontaktelementen des Kontaktsteckers angeordnet. Über den Temperatursensor kann erkannt werden, ob irgendwo an den Kontaktelementen es zu einer übermäßigen Erhitzung kommt, um gegebenenfalls ein Abschalten des Ladevorgangs zu bewirken. Die Einbettung des Temperatursensors in einen Isolierkörper kann erforderlich sein, um die Temperatursensorik elektrisch von den Kontaktelementen, an denen es zu einer Erwärmung kommen kann, zu isolieren. Dies bringt aber gleichzeitig den Nachteil mit sich, dass eine Temperaturänderung an einem der Kontaktelemente über den Isolierkörper zeitlich verzögert übertragen wird und somit mit zeitlicher Verzögerung an den Temperatursensoren wahrgenommen wird. Insbesondere bei Konzepten, die eine Schnellabschaltung eines Lastkreises im Fehlerfall ermöglichen sollen, sind derartige Anordnungen von Temperatursensoren daher unter Umständen ungeeignet.

Es ist Aufgabe der Erfindung, eine Temperatursensoranordnung in einem Ladestecker weiterzuentwickeln und dabei die Temperaturmessgenauigkeit zu verbessern und die Nachteile bekannter Lösungen teilweise zu verringern.

Zur Lösung der Aufgabe schlägt die Erfindung eine Temperatursensoranordnung im vorderen Bereich des Einlegeteils (auch als Insert bezeichnet) eines Ladesteckers unmittelbar angrenzend an die Kontaktelemente vor.

Die Erfindung erkennt, dass die Anordnung im vorderen Bereiches des Inserts, das heißt im Bereich des Steckgesichtes, welches in Steckrichtung des Ladesteckers die Ladedose lösbar kontaktiert, besonders gut geeignet ist die thermische Kopplung genau in dem Bereich zu bewerkstelligen, die besonders hohen Temperaturbelastungen ausgesetzt ist.

Bei CCS- und MCS-Ladesteckern werden jeweils zwei Steckkontaktelemente, ausgebildet als Gleichstromkontaktelemente verwendet, die innerhalb des Inserts und des Steckgesichtes parallel und benachbart angeordnet sind. Die Erfindung platziert den Temperatursensor direkt angrenzend und zwischen diesen beiden Kontaktelementen derart, dass der Temperatursensor die Kontaktelemente jeweils in wenigstens einem Oberflächenabschnitt vorzugsweise flächig berührt und so einen Festkörperkontakt herstellt.

Die Kontaktelemente weisen in deren axialer Erstreckungsrichtung, die der Steckrichtung entspricht, einen ersten und wenigstens einen zweiten Bereich auf. Der erste Bereich umfasst wenigstens Kontaktelementoberflächen, welche für die Kontaktierung mit der Ladebuchse in Steckrichtung ausgebildet sind und der wenigstens eine zweite Bereich umfasst beispielsweise Mittel zur Festlegung eines Stromkabels oder eine Schlüsselfläche für ein Werkzeug. Der jeweilige Oberflächenabschnitt mit der Berührfläche von Kontaktelement und Temperatursensor wird dabei möglichst weit vorne innerhalb des zweiten Bereiches des Kontaktelementes, das heißt an der Oberfläche möglichst nah angrenzend an Kontaktelementoberflächen, welche für die Kontaktierung mit der Ladebuchse in Steckrichtung konzipiert sind, angeordnet. Vorteilhaft kann die Schlüsselfläche des Kontaktelementes sein.

Sowohl die Kontaktelemente als auch der Temperatursensor werden durch jeweils ein Sicherungselement pro Kontaktelement an dem Einlegeteil lösbar festgelegt. Das heißt das jeweilige Sicherungselement fixiert in integraler Weise sowohl jeweils ein Kontaktelement als auch den Temperatursensor. Dabei ist der Temperatursensor in eine Vertiefung innerhalb des Einlegeteils eingelegt. Durch die Kombinationsfixierung von Kontaktelementen und Temperatursensor und dem Einlegen des Temperatursensors in eine Vertiefung des Einlegeteils wird eine sichere und einfache Montage gewährleistet und die Festlegung erfolgt zuverlässig. Die raumsparende Anordnung erlaubt darüber hinaus die Positionierung des Temperatursensors innerhalb des Ladesteckers im Einlegeteil weit vorne in Steckrichtung relativ zu den Kontaktelementen.

Die Erfindung wird im Folgenden anhand eines exemplarischen Ausführungsbeispiels in Verbindung mit den Figuren näher erläutert. Dabei zeigen:
- Fig. 1: eine Vorderansicht des Ladesteckers aus dem Blickwinkel der Ladedose und damit der Steckrichtung;
- Fig. 2: eine Vorderansichtebene des Ladesteckers aus der Ladedosenblickrichtung.

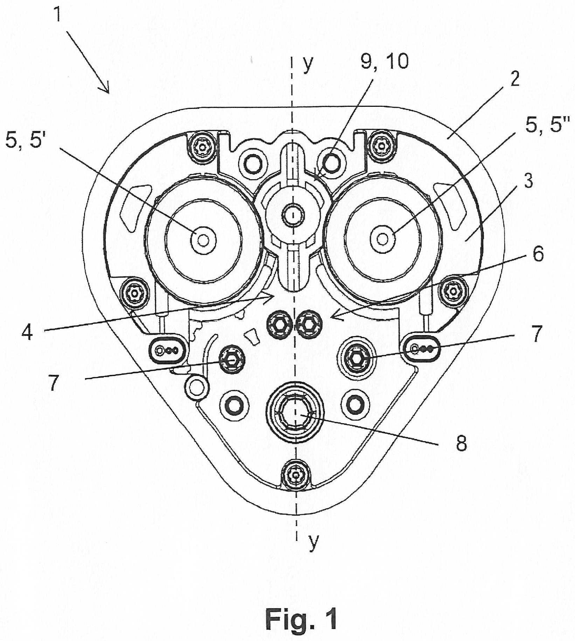

Fig. 1 umfasst eine Vorderansicht des Ladesteckers 1 aus dem Blickwinkel der Ladedose und damit der Steckrichtung des Ladesteckers 1. Innerhalb des in Steckrichtung geöffneten Ladesteckergehäuses 2 ist das Einlegeteil 3 mit dem Steckgesicht 4 aufgenommen. Das in

Fig. 1 gezeigte Ausführungsbeispiel ist ein MCS-Ladestecker, gleichfalls sind andere Ladesteckertypen, wie beispielsweise CCS-Ladestecker von der Erfindung umfasst.

Das Steckgesicht 4 weist zwei Kontaktelemente 5, ausgebildet als Gleichstrompluskontakt 5' und Gleichstromminuskontakt 5" auf, sodass das Aufladen der Fahrzeugbatterie mittels Gleichstrom ermöglicht ist. Weiterhin weist das Steckgesicht 4 eine Kommunikationsschnittstelle 6 sowie CCS-kompatible Pilotpins 7 auf. Ergänzt wird die Anordnung der Kontakte des Steckgesichtes 4 durch einen Schutzkontakt 8. Die Kontaktanordnung des Steckgesichtes 4 ist eingehaust und festgelegt in dem Einlegeteil 3.

Die zwei Kontaktelemente 5, ausgebildet als Gleichstrompluskontakt 5' und Gleichstromminuskontakt 5" sind beabstandet zueinander und achsensymmetrisch bezüglich der Symmetrielinie y-y angeordnet. Die Erfindung nutzt diese Anordnung und sieht einen Temperatursensor 9 positioniert in dem Raum zwischen den Kontaktelementen 5, 5', 5" und zu diesen direkt angrenzend vor. Dabei wird der Temperatursensor 9 mit gleichem Abstand zu den Kontaktelementen 5, 5', 5" innerhalb des Einlegeteils 3 und dem Steckgesicht 4 angeordnet, sodass eine thermische Kopplung zwischen dem Temperatursensor 9 und beiden Kontaktelementen 5, 5', 5" erfolgt.

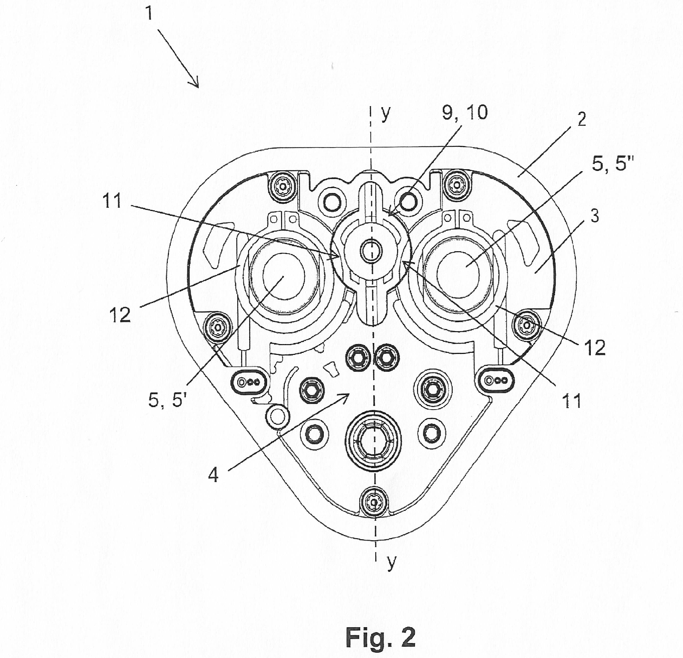

Fig. 2 zeigt eine Vorderansichtebene des Ladesteckers 1 aus der Ladedosenblickrichtung. Die gewählte Sichtebene liegt innerhalb des Einlegeteils 3 auf der Höhe der Kontaktelemente 5, 5', 5" in ihrem zweiten Bereich und damit in ihrer Axialerstreckung angrenzend an den ersten Bereich, der die Kontaktelementoberflächen für die Kontaktierung mit einer Ladebuchse bereitstellt. Der zweite Bereich, der sich in Steckrichtung hinter dem ersten Bereich befindet und axial kongruent zum ersten Bereich ist, kann eine Schlüsselfläche aufweisen, welche gut für die thermische Kopplung geeignet ist.

Um die thermische Kopplung zwischen beiden Kontaktelementen 5, 5', 5" und dem Temperatursensor 9 zu optimieren wird ein Festkörperkontakt hergestellt. Dies geschieht dadurch, dass der Temperatursensor 9 oder ein geeignetes Adaptergehäuse an seiner Oberfläche für jedes Kontaktelement 5, 5', 5" über einen Oberflächenabschnitt 11 verfügt, der geometriekompatibel zu der Oberfläche der Kontaktelemente 5, 5', 5" ist und auf diese Weise eine Anlagefläche erzeugt, die sich an die äußere Oberfläche der Kontaktelemente 5, 5', 5" anschmiegt. Soll der Festkörperkontakt zur thermischen Kopplung, beispielsweise über einen Abschnitt der Kontaktelemente 5, 5', 5" mit zylindrischer Außenkontur hergestellt werden, so kann der Oberflächenabschnitt 11 des Temperatursensors 9 für jedes Kontaktelement 5, 5', 5" konkav oder plan-konkav ausgebildet sein. Andere Oberflächenpaarungen sind in Abhängigkeit der Oberflächengeometrie der Kontaktelemente 5, 5', 5" im Bereich der thermischen Kopplung möglich. Besonders vorteilhaft ist auch die Schlüsselfläche der Kontaktelemente 5, 5', 5" mit ihrer Außensechskantkontur.

Festgelegt wird der Temperatursensor 9 in seiner relativen Positionierung in dem Raum zwischen und direkt angrenzend zu den Kontaktelementen 5, 5', 5" durch eine als Aufnahme ausgebildete Vertiefung 10 in dem Einlegeteil 3. Die Vertiefung 10 ist ähnlich einem Nest oder einer Kavität bei Gussformen ausgebildet, der Temperatursensor 9 wird in diese Vertiefung 10 eingedrückt und auf diese Weise in radialer Ebene des Ladesteckers 1 und damit quer zur Steckrichtung sowie einer axialen Richtung festgelegt. Um auch eine Festlegung in der zweiten axialen Richtung, welche vorzugsweise die Steckrichtung ist, zu bewerkstelligen, wird wenigstens ein Sicherungselement 12 der Kontaktelemente 5, 5', 5" in integraler Weise genutzt.

Das wenigstens eine Sicherungselement 12 eines Kontaktelementes 5, 5', 5" legt das Kontaktelement 5, 5', 5" axial innerhalb des Einlegeteils 3 fest. Die Erfindung sieht vor, dass die axiale Positionierung des Temperatursensors 9 durch die Lage der Vertiefung 10 im Einlegeteil 3 relativ zu dem wenigstens einen Sicherungselement 12 derart erfolgt, dass gleichzeitig auch der Temperatursensor 9 in der Vertiefung 10 in axialer Steckrichtung festgelegt ist. Vorzugsweise sind beide Sicherungselemente 12 des gezeigten MCS-Ladesteckers, das heißt das Sicherungselement 12 für das Gleichstrompluskontaktelement 5' und das Sicherungselement 12 für das Gleichstromminuskontaktelement 5" an der axialen Steckrichtungsfestlegung beteiligt.

### Bezugszeichenliste

- 1: Ladestecker
- 2: Ladesteckergehäuse
- 3: Einlegeteil (Insert)
- 4: Steckgesicht
- 5: Kontaktelement
- 5': Gleichstrompluskontaktelement
- 5": Gleichstromminuskontaktelement
- 6: Kommunikationsschnittstelle
- 7: Pilotpin
- 8: Schutzkontakt
- 9: Temperatursensor
- 10: Vertiefung
- 11: Oberflächenabschnitt
- 12: Sicherungselement

- y-y: Symmetrielinie

## Patentansprüche

1. Ladestecker (1) mit einem Ladesteckergehäuse (2) und einem in dem Ladesteckergehäuse (2) aufgenommenen Einlegeteil (3), wobei in dem Einlegeteil (3) Kontaktelemente (5) zur lösbaren, elektrisch leitenden Verbindung eines batterieelektrischen Fahrzeugs mit einer Ladestation und wenigstens ein Temperatursensor (9) zur Temperaturmessung der Kontaktelemente (5) aufgenommen sind, wobei die Kontaktelemente (5) aus einem Gleichstrompluskontaktelement (5') und einem Gleichstromminuskontaktelement (5") bestehen und beabstandet zueinander sowie weitgehend achsensymmetrisch bezüglich der Symmetrielinie y-y des Ladesteckers (1) angeordnet sind, **dadurch gekennzeichnet, dass** der wenigstens eine Temperatursensor (9) zwischen den Kontaktelementen (5, 5', 5") in einer Vertiefung (10) des Einlegeteils (3) angeordnet ist.

2. Ladestecker (1) gemäß Anspruch 1, **dadurch gekennzeichnet, dass** die Kontaktelemente (5, 5', 5") durch jeweils ein Sicherungselement (12) in dem Einlegeteil (3) festgelegt sind und wenigstens ein Sicherungselement (12) den Temperatursensor (9) in der Vertiefung (10) des Einlegeteils (3) fixiert.

3. Ladestecker (1) gemäß Anspruch 1, **dadurch gekennzeichnet, dass** der wenigstens eine Temperatursensor (9) weitgehend mittig auf der Symmetrielinie y-y positioniert und abstandsgleich zu den Kontaktelementen (5, 5', 5") angeordnet ist.

4. Ladestecker (1) gemäß Anspruch 1, **dadurch gekennzeichnet, dass** der wenigstens eine Temperatursensor (9) mit den Kontaktelementen (5, 5', 5") thermisch gekoppelt ist.

5. Ladestecker (1) gemäß Anspruch 4, **dadurch gekennzeichnet, dass** die thermische Kopplung der Kontaktelemente (5, 5', 5") in einem zweiten Bereich der Kontaktelemente (5, 5', 5") erfolgt.

6. Ladestecker (1) gemäß Anspruch 4, **dadurch gekennzeichnet, dass** die thermische Kopplung durch Festkörperkontakt erfolgt.

7. Ladestecker (1) gemäß Anspruch 6, **dadurch gekennzeichnet, dass** der Festkörperkontakt durch wenigstens einen Oberflächenabschnitt (11) des wenigstens einen Temperatursensors (9) für jedes Kontaktelement (5, 5', 5") erfolgt, dadurch, dass der Oberflächenabschnitt (11) eine Anlagefläche bildet, die sich an die äußere Oberfläche der Kontaktelemente (5, 5', 5") anschmiegt.

8. Ladestecker (1) gemäß Anspruch 6, **dadurch gekennzeichnet, dass** der Festkörperkontakt durch wenigstens einen Oberflächenabschnitt (11) eines Adapters erfolgt, in den das wenigstens eine Temperaturelement (9) aufgenommen ist.

9. Ladestecker (1) gemäß Anspruch 7, **dadurch gekennzeichnet, dass** der wenigstens eine Oberflächenabschnitt (11) für jedes Kontaktelement (5, 5', 5") geometriekompatibel zu der jeweiligen Kontaktelementoberfläche ausgebildet ist.

10. Ladestecker (1) gemäß Anspruch 7, **dadurch gekennzeichnet, dass** der wenigstens eine Oberflächenabschnitt (11) konkav oder plan-konkav ausgebildet ist.

11. Ladestecker (1) gemäß Anspruch 1, **dadurch gekennzeichnet, dass** der Ladestecker (1) ein MCS- oder ein CCS-Ladestecker ist.
